# EUROPÄISCHE PATENTSCHRIFT

(11) **EP 1 478 557 B1**
(45) Veröffentlichungstag und Bekanntmachung des Hinweises auf die Patenterteilung: **28.01.2015**
(21) Anmeldenummer: 03711887.4
(22) Anmeldetag: 13.02.2003
(51) Int. Cl.: B60T 8/36, B60T 8/44, B60T 8/48

(54) **VERFAHREN ZUM EINREGELN EINES VORGEGEBENEN VERÄNDERLICHEN BREMSDRUCKES**
METHOD FOR REGULATING A PREDETERMINED MODIFIABLE BRAKE PRESSURE
PROCEDE POUR REGLER UNE PRESSION DE FREINAGE DONNEE VARIABLE

(30) Priorität: 14.02.2002 DE 10206344; 31.05.2002 DE 10224059
(43) Veröffentlichungstag der Anmeldung: 24.11.2004
(73) Patentinhaber: Continental Teves AG & Co. oHG, 60488 Frankfurt am Main (DE)
(72) Erfinder: GRONAU, Ralph, 35083 Wetter (DE); SCHELLER, Tobias, 65931 Frankfurt am Main (DE); REVIOL, Ralf, 63128 Dietzenbach-Steinberg (DE); NEU, Andreas, 76773 Kuhardt (DE)
(86) Internationale Anmeldenummer: PCT/EP2003/001444
(87) Internationale Veröffentlichungsnummer: WO 2003/068574

(56) Entgegenhaltungen:
- WO-A-02/090159
- DE-A- 10 106 464
- DE-A- 19 654 427
- DE-A- 19 707 960
- DE-A- 19 946 348
- DE-A1- 19 902 126
- US-A1- 2001 028 194
- US-B1- 6 345 869

## Beschreibung

Die Erfindung betrifft ein Verfahren zum Einregeln eines vorgegebenen veränderlichen Bremsdruckes in den Radbremsen einer Bremsanlage, bei dem in einem Regelungs- und/oder Datenverarbeitungssystem den Bremsdruck in den einzelnen Radbremsen bestimmende Eingangsgrößen ausgewertet und Stellgrößen von Hydraulikventilen festgelegt werden.

Vakuum-Bremskraftverstärker benötigen eine vom Motor zur Verfügung gestellte Unterdruckversorgung zur Unterstützung der von dem Fahrer aufzubringenden Pedalkraft. Abhängig vom Motor kann schon bei relativ geringen Pedalkräften ein Zustand erreicht werden, wo eine weitere Erhöhung der Kraft auf die Betätigungseinheit nur durch eine Steigerung der Pedalkraft möglich ist, da der Vakuum-Bremskraftverstärker die maximal mögliche Unterstützungskraft erreicht hat. Den Zustand bezeichnet man als Aussteuerpunkt des Verstärkers. Bremsungen die über dem Aussteuerpunkt des Vakuum-Bremskraftverstärkers stattfinden, stellen dabei hohe Anforderungen an den Fahrer hinsichtlich der aufzubringenden Pedalkraft. Aus diesem Grund werden zunehmend Bremssysteme (OHB-V) eingesetzt, die durch einen aktiven hydraulischen Bremsdruckaufbau den Fahrer unterstützen. Derartige Bremssysteme weisen in der Regel ein Motor-Pumpen-Aggregat und ein Hydraulikaggregat auf, die von einer elektronischen Regelung, wie ESP, ABS, ASR und dgl. entsprechend der gewünschten Bremskraftunterstützung geregelt werden.

Bei dem Druckaufbau in den Radbremsen mittels hydraulischer Unterstützung über den Aussteuerpunkt des Vakuum-Bremskraftverstärkers hinaus werden die (analogisierten) Trennventile geschlossen und die Hydraulikpumpe fördert Bremsflüssigkeit aus dem Tandemhauptzylinder (THZ) in die Radbremsen. In der Druckabbauphase muss der zusätzlich erzeugte Druck über die Trennventile komfortabel bezüglich Pedalgefühl und Bremswirkung in den Tandemhauptzylinder abgebaut werden. Dazu sind gewöhnlich zwei zusätzliche Drucksensoren an den Radbremsen, je einer für jeden Bremskreis, nötig, um den Raddruck zu ermitteln.

Dies erfordert einen größeren, Bauteileaufwand der zu einer Erhöhung der Systemkosten führt.

Aus der gattungsbildenden DE 199 02 126 A1 ist ein Bremssystem bekannt, mit einem Hauptbremszylinder, einem Unterdruckbremskraftverstärker, der einen Übergangspunkt aufweist, an dem sein Verstärkungsverhältnis verringert wird, einem hydraulisch betätigten Radbremszylinder und eine zweite Hydraulikdruckquelle. Wenn die Bremsbetätigungskraft auf den Übergangspunkt angestiegen ist, wird unter Verwendung der zweiten Hydraulikdruckquelle ein gegenüber dem durch den Hauptbremszylinder erzeuten Druck erhöhter hydraulischer Druck in den Radbremszylinder eingesteuert.

Der Erfindung liegt die Aufgabe zugrunde, ein Verfahren zum Einregeln eines vorgegebenen veränderlichen Bremsdruckes in den Radbremsen einer Bremsanlage zu schaffen, bei dem ohne Kenntnis eines gemessenen Raddrucks Bremsdrücke nach Maßgabe von Eingangsgrößen eingestellt werden können.

Erfindungsgemäß wird diese Aufgabe durch ein Verfahren gemäß Anspruch 1 gelöst.

In dem Regelungs- oder Datenverarbeitungssystem ist eine Kennlinie hinterlegt, die die Ventilcharakteristik bzw. den Ventilstrom des Hydraulikventils mit der Druckdifferenz des Hydraulikventils korreliert, wobei die Stellgröße des Hydraulikventils nach Maßgabe der Kennlinie festgelegt wird. Vorteilhaft wird mit dem vorgegebenen veränderlichen Bremsdruck eine hydraulische Verstärkung des in die Bremsanlage eingesteuerten Bremsdruckes bewirkt. Die Stellgröße ist ein elektrischer Ventilstrom, mittels dem das Hydraulikventil analog gesteuert wird.

Mit Kenntnis der Ventilkennlinie eines Trennventils, des Tandemhauptzylinder-Druckes und des Soll-Druckes für die Radbremsen kann ein Ventilstrom bestimmt und so eingestellt werden, dass sich ein bestimmter Raddruck einstellt, der nicht unterschritten wird, ohne dass zusätzliche Drucksensoren, die die Raddrücke messen, erforderlich sind.

Vorteilhaft wird die Stellgröße aus der Druckdifferenz zwischen dem Solldruck für die Radbremsen und dem Druck einer Betätigungseinrichtung (Druckdifferenz des Hydraulikventils) bestimmt. Der Druck der Betätigungseinrichtung (THZ) wird über den bei einer ESP-Regelung in einem Bremskreis vorhandenen Drucksensor und der Solldruck in einem bekannten Modell ermittelt.

Um einerseits Leckagen zu verringern und andererseits eine Begrenzung des Maximaldruckes situationsabhängig zu ermöglichen, sind erfindungsgemäß mindestens zwei Strategien zum Einregeln des Bremsdruckes vorgesehen, wobei nach der ersten Strategie der Ventilstrom dem Verlauf der Kennlinie folgt und die zweite Strategie Sprungfunktionen zu dem maximalen Ansteuerstrom bzw. zu dem durch die Kennlinie repräsentierten Ansteuerstrom vorsieht. Der maximale Ansteuerstrom wird vorteilhaft entsprechend einer Funktion nach Imax=f(Pₘₐₓ, P_{THZ}, P_{DBV}) = min(Pₘₐₓ-P_{THZ}, P_{DBV}) begrenzt.

Eine erfindungsgemäße Einrichtung zur Durchführung des Verfahrens nach einem der Ansprüche 1 bis 5, ist so ausgebildet, dass der durch Ansteuerung einer Pumpe erzeugte Bremsdruck so gesteuert wird, dass eine gewünschte hydraulische Verstärkung des eingesteuerten Bremsdruckes in jedem Bremskreis erfolgt.

Ein Ausführungsbeispiel ist in der Zeichnung dargestellt und wird im Folgenden näher beschrieben.

Es zeigen
- Fig. 1: eine Bremsanlage mit zwei Bremskreisen
- Fig. 2: eine schematische Darstellung des Signalverlaufs des Ansteuerstromes eines Hydraulikventils und des Drucks nach dem erfindungsgemäßen Verfahren
- Fig. 3: eine Kennlinie nach der Erfindung
- Fig. 4: eine schematische Darstellung des Signalverlaufs des Ansteuerstroms mit zusätzlicher Bestromung

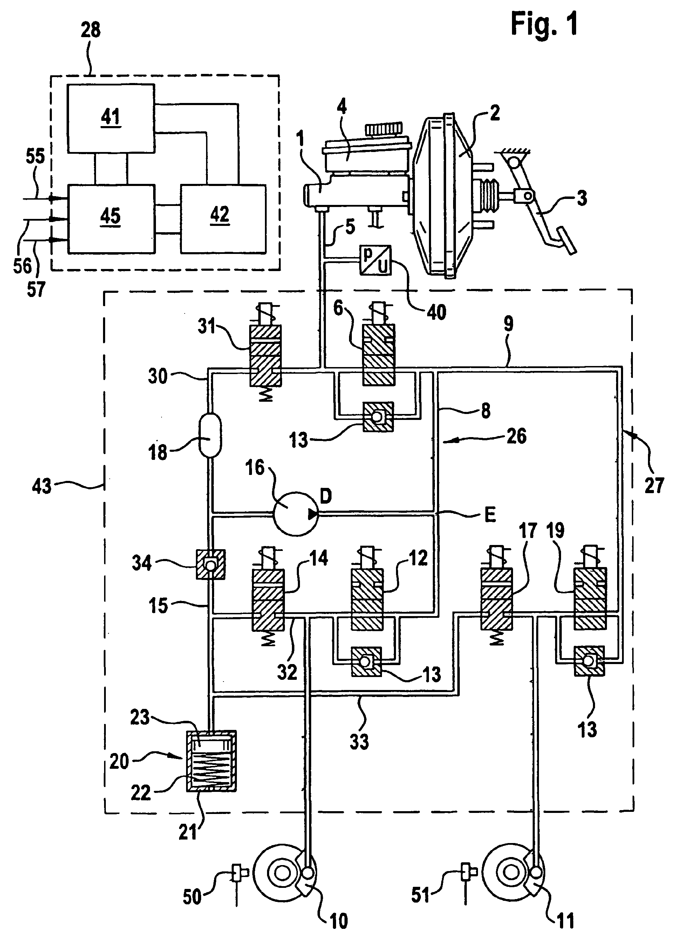

Der in Figur 1 dargestellte eine Bremskreis einer Bremsanlage für Kraftfahrzeuge mit zwei Bremskreisen besteht aus einer Betätigungseinheit 1, z.B. einem Bremszylinder, mit einem Bremskraftverstärker 2, der durch ein Bremspedal 3 betätigt wird. An der Betätigungseinheit 1 ist ein Vorratsbehälter 4 angeordnet, der ein Druckmittelvolumen enthält und in der Bremslösestellung an die Arbeitskammer der Betätigungseinheit angeschlossen ist. Der dargestellte eine Bremskreis weist eine an eine Arbeitskammer der Betätigungseinheit 1 angeschlossene Bremsleitung 5 mit einem Trennventil 6 auf, das in seiner Ruhestellung einen offenen Durchgang für die Bremsleitung 5 bildet. Das Trennventil 6 wird üblicherweise elektromagnetisch betätigt.

Die Bremsleitung 5 verzweigt sich in zwei Bremsleitungen 8, 9, die jeweils zu einer Radbremse 10, 11 führen. Die Bremsleitungen 8, 9 enthalten jeweils ein elektromagnetisch betätigbares Einlassventil 12, 19, das in seiner Ruhestellung offen ist und durch Erregung des Betätigungsmagneten in eine Sperrstellung geschaltet werden kann. Jedem Einlassventil 12, 19 ist ein Rückschlagventil 13 parallel geschaltet, das in Richtung des Bremszylinders 1 öffnet. Parallel zu diesen Radbremskreisen 26, 27 ist ein sogenannter Rückförderkreis angeschlossen, der aus Rücklaufleitungen 15, 32, 33 mit einer Pumpe 16 besteht. Die Radbremsen 10, 11 schließen über jeweils ein Auslassventil 14, 17 über Rücklaufleitungen 32, 33 an die Rücklaufleitung 15 an und damit an die Saugseite der Pumpe 16, deren Druckseite mit der Bremsdruckleitung 8 in einem Einmündungspunkt E zwischen dem Trennventil 6 und den Einlassventilen 12, 19 verbunden ist.

Die Pumpe 16 ist als Hubkolbenpumpe mit nicht näher dargestelltem Druckventil und einem Saugventil ausgebildet. An der Saugseite der Pumpe 16 befindet sich ein Niederdruckspeicher 20, bestehend aus einem Gehäuse 21 mit einer Feder 22 und einem Kolben 23.

In der Verbindung zwischen dem Niederdruckspeicher 20 und der Pumpe 16 ist ein vorgespanntes, zu der Pumpe öffnendes Rückschlagventil 34 eingesetzt.

Die Saugseite der Pumpe 16 ist weiterhin über eine Saugleitung 30 mit einem Niederdruckdämpfer 18 und einem Umschaltventil 31 mit dem Bremszylinder 1 verbunden. Außerdem weist der Bremskraftübertragungskreis neben dem Hydraulikaggregat 43 eine Einrichtung 28 zur Steuerung der Bremsanlage auf. Die Einrichtung ist im wesentlichen eine ESP-Regeleinheit 45, der ein Modell 41 zum Ermitteln des Soll-Bremsdruckes und ein Speicher 42 zum Hinterlegen der Ventilkennlinie, die den Ventilstrom und die entsprechende Druckdifferenz, bei der das Trennventil 6 öffnet, beschreibt, zugeordnet. Der Drucksensor 40, der den Druck der Betätigungseinheit 1 feststellt, ist in der Bremsleitung 5 zwischen dem Bremszylinder 1 und dem Umschaltventil 31 bzw. dem Trennventil 6 angeordnet. Den Rädern zugeordnete Drehzahlsensoren sind mit 50, 51 bezeichnet. Eingangsgrößen, die der ESP-Regeleinheit 45 zugeführt werden, wie zum Beispiel die Signale der Drehzahlsensoren, mindestens eines Gierratensensors, eines Beschleunigungssensors oder des Drucksensors 40, sind exemplarisch mit 55-57 bezeichnet.

Die Bremsanlage arbeitet wie folgt:

Bei z.B. Bremsungen erhöht der Fahrer über das Pedal 3 und die Betätigungseinheit 1 mit dem Vakuum-Bremskraftverstärker 2 den Bremsdruck in dem Hydraulikaggregat 43 , ohne dass das Fahrzeug entsprechend der Pedalkraft verzögern würde. Die Einrichtung 28 wertet bei der Einbremsung über das Pedal den von dem Drucksensor 40 ermittelten Druck der Betätigungseinheit 1 bzw. den in die Bremsleitung 5 eingesteuerten Bremsdruck aus. Erreicht der Druck einen Grenzwert, der den Aussteuerdruck der Betätigungseinheit bzw. den Aussteuerpunkt des Vakuum-Bremskraftverstärkers 2 beschreibt, erfolgt die Übergabe von der pneumatischen Bremskraftunterstützung durch den Vakuum-Bremskraftverstärker 2 hin zu der aktiven Bremskraftverstärkung durch die Pumpe 16, insbesondere nach der Beziehung Pₛₒₗₗ= P_{Aussteuerpunkt} + Faktor K x (P_{THZ}-P_{Aussteuerpunkt}) mit Pₛₒₗₗ=Solldruck, P_{Aussteuerpunkt}=Druck am Aussteuerpunkt des Bremskraftverstärkers, P_{THZ} = Druck der Betätigungseinheit. Dazu werden bei geöffnetem Umschaltventil 31 im Druckaufbau die (analogisierten) Trennventile 6 geschlossen und die Hydraulikpumpe 16 fördert Bremsfluid aus dem Bremszylinder 1, z.B. einem Tandemhauptzylinder (THZ), in die Radbremsen 10, 11. Die Einlassventile 12 bzw. 19 sind geöffnet, die Auslassventile 14 bzw. 17 geschlossen. In der Druckabbauphase wird der zusätzlich erzeugte Druck über die analogisierten Trennventile 6 komfortabel bezüglich Pedalgefühl und Bremswirkung in den Bremszylinder 1 abgebaut.

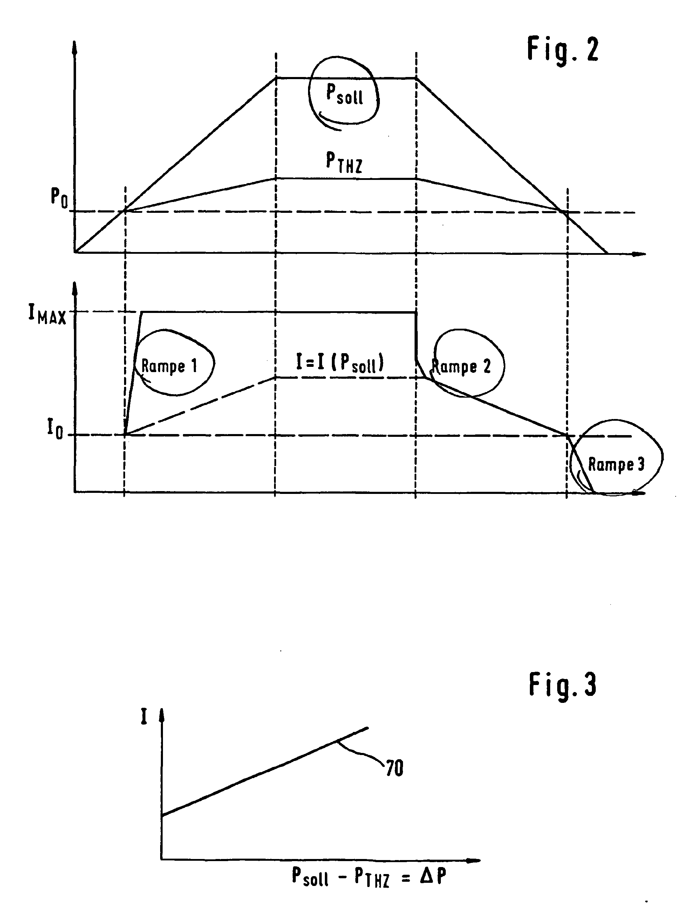

Figur 2 zeigt eine schematische Darstellung des Signalverlaufs des Ansteuerstromes I₀, I des Trennventils 6 und des Differenzdrucks Po, P_{THZ}, P_{Soll}.

Dieser Ansteuerstrom wird aus der Differenz zwischen dem Solldruck Pₛₒₗₗ für die Radbremsen 10, 11 und dem gemessenen Druck des Bremszylinders (THZ) 1 bestimmt. Ist in den Bremszylindern der Radbremsen 10, 11 ein größerer Druck, so öffnet sich das Trennventil 6 und es strömt so lange Flüssigkeit in den Bremszylinder 1 zurück, bis sich der gewünschte Druck in dem Hydraulikaggregat 43 eingestellt hat. Bei einer ausgeglichenen Druckbilanz zwischen den Leitungen 5 und 8, 9 bzw. zwischen dem Ein- und Ausgang des Trennventils 6 schließt das Trennventil 6 und der Druck bleibt erhalten. Um den Einstellvorgang zu beschleunigen kann der Solldruckgradient des Bremsdrucks Pₛₒₗₗ ausgewertet werden und damit der Ventilstrom I entsprechend modifiziert werden. Hierdurch wird ein größerer Volumenstrom durch das Trennventil 6 erzielt. Das heißt, auf schnelle Druckabbauanforderungen wird mit einem weiter geöffneten Trennventil 6 reagiert.

Zur Ansteuerung des Trennventils 6 ist die Ventilkennlinie 70 (Fig. 3) im nichtflüchtigen Speicher 42 hinterlegt, die den Ventilstrom I₀, I, I_{Max} und die entsprechende Druckdifferenz P₀, Pₛₒₗₗₑ, P_{THZ}, bei der das Trennventil 6 öffnet beschreibt. Diese Kennlinie 70 kann durch eine Vermessung der Ventile oder durch eine Kalibrierung am Bandende ermittelt werden. Die Kalibrierung am Bandende stellt eine vorteilhafte Variante dar, da hier die komplette Kette der Einflußfaktoren (Teiber, Spulen, Ventil, etc.) in die aufgenommene Kennlinie einfließen. Diese Kennlinie ermöglicht es den durch Ansteuerung der Pumpe 16 erzeugten Druck so zu steuern, daß die gewünschte hydraulische Verstärkung hinreichend genau eingestell werden kann, ohne daß der Fahrer den Unterschied zum geregelten System (mit Raddrucksensoren) auflösen kann.

Prinzipiell kann man Bremsvorgänge in die Abschnitte Druckaufbau, Druckhalten und Druckabbau einteilen. Bei jedem der Bremszyklen sind im wesentlichen zwei Strategien zum Einregeln des Bremsdrucks vorgesehen, wobei nach der ersten Strategie der Bremsdruck dem Verlauf der Kennlinie 70 folgt und die zweite Strategie Sprungfunktionen zu dem maximalen Ansteuerstrom bzw. zu dem durch die Kennlinie repräsentierten Ansteuerstrom vorsieht.

### I.) Druckaufbau:

Strategie A): Der Ventilstrom I, mittels dem das Trennventil 6 eingestellt wird, wird entsprechend der in Figur 3 dargestellten Kennlinie I=I(Pₛₒₗₗ) modifiziert. Vorteil: Der in den Radbremsen 10, 11 eingestellte Druck wird in seiner Höhe begrenzt. Baut die Pumpe 16 in mindestens einem Bremskreis zuviel Druck auf, so kann der Anteil über dem Solldruck Pₛₒₗₗ über das Trennventil 6 abströmen. Dieser Fall kann bei schwarz-weiß aufgeteilten Bremsanlagen insbesondere an der Hinterachse auftreten.

Möglichkeit B): Sprung auf den Schließstrom für Differenzdruck Null (I₀) und anschließend eine schnelle Rampe 1 auf den maximalen Strom I_{MAX}, nach der Beziehung Iₘₐₓ = f (Pₘₐₓ, P_{THZ}, P_{DBV}) =min (Pₘₐₓ-P_{THZ}, P_{DBV}) mit P_{DBV} = Druckbegrenzungsventil-Druck zu, Pₘₐₓ = maximaler Druck in den Bremsen, P_{THZ} = Druck der Betätigungseinheit. Da im Regler der Zusammenhang zwischen Druckdifferenz am Trennventil 6 und dem Strom, bei dem das Trennventil 6 bei dieser Druckdifferenz zu öffnen beginnt, abgelegt ist muss ein Nullpunktabgleich stattfinden. Einmal offen schließt das Trennventil 6 aufgrund von Hystereseeffekten, wie z.B. Reibung, erst wieder bei einer niedrigeren Druckdifferenz. Um ein offenes Trennventil 6 wieder sicher zu schließen, muss es also entsprechend einer um einen Druckwert, z.B. ca. 30 bar, größeren Druckdifferenz bestromt werden. Vorteil: Das Trennventil 6 zeigt nur geringe Leckagen. Keine Schließgeräusche.

Je nach Situation wird die optimal passende der beiden Strategien pro Bremskreis ausgewählt. Dabei wird Strategie A) bei stark unterschiedlichen Volumenkennlinien verwendet z.B.
- Schwarz Weiss aufgeteilte Anlagen,
- bei ESP - OHB - Überlagerung
- bei ABS - OHB - Überlagerung

Hier kann bei laufender Pumpe, der maximale Raddruck vorgegeben werden.

Sonst wird Strategie B) verwendet, um das Trennventil 6 bestmöglich geschlossen zu halten.

### II.)Druckhalten:

Möglichkeit A) Der Ventilstrom I, mittels dem das Trennventil 6 eingestellt wird, wird entsprechend der in Figur 3 dargestellten Kennlinie I=I(Pₛₒₗₗ) modifiziert. Vorteil: Der reale Druck wird nach oben begrenzt. Überdruck kann abgebaut werden. Das kann bei Überlagerung mit anderen Regelfunktionen der Einrichtung 28 wie ESP, ABS,.u.dgl. notwendig sein.

Möglichkeit B) Ventilstrom bleibt bei I_{MAX}
Vorteil: Das Ventil ist maximal dicht.
Eine Druckbegrenzung des Hydraulikaggregates und der Radbremsen findet auf einen vorgegebenen DBV-Druck statt. Unter DBV-Druck P_{DBV} wird eine Druckbegrenzung verstanden, die einen Ausfall der Bremsanlage oder Teile der Bremsanlage verhindert. Das Trennventil 6 übernimmt dabei eine Druckbegrenzungs-Funktion nach der Beziehung I=I [min(Pₘₐₓ-P_{THZ}, P_{DBV})], wobei beim Überschreiten des maximalen Drucks das Trennventil 6 öffnet und Druck in die Betätigungseinheit 1 abgebaut wird. Unterhalb des maximalen Drucks wird das Trennventil 6 geschlossen, bzw. bleibt geschlossen. Die Regeleinheit 45 steuert dabei das Trennventil 6 nach den sich ergebenden Differenzdrücken vor und hinter dem Trennventil 6 oder dem Druck (nach dem Trennventil 6) in dem Hydraulikaggregat 43 und den Radbremsen 10, 11.

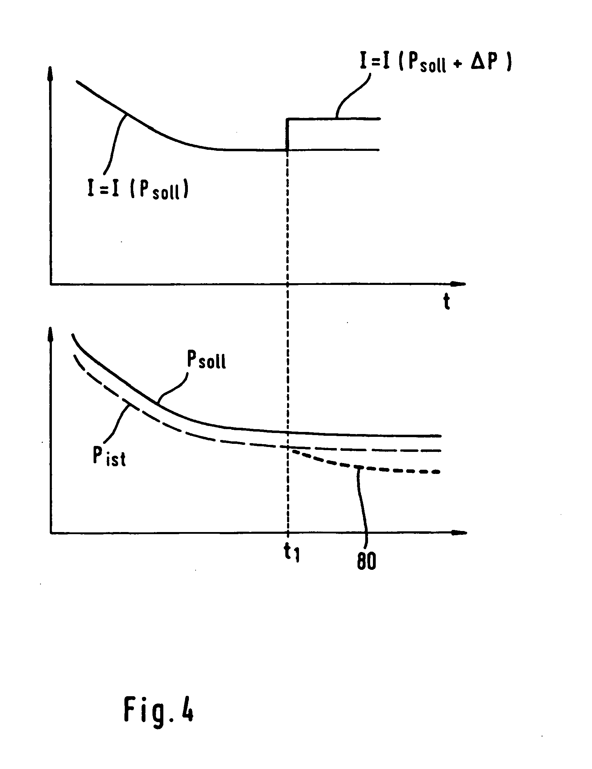

Möglichkeit C) Detektiert man für eine gewisse Zeit oder Anzahl Loops in Strategie A gleiche oder steigende Solldruckdifferenzen, so wird das Trennventil 6 entsprechend einer zusätzlichen Druckdifferenz bestromt, um es zu schließen. Bei sinkenden Solldruckdifferenzen wechselt man wieder zurück in den Status nach Strategie A): Bestromung nach Solldruck. In Fig. 4 ist der Verlauf des Solldrucks Pₛₒₗₗ und der Verlauf des Istdrucks Pᵢₛₜ dargestellt. Zum Zeitpunkt t₁ wird das Trennventil 6 gemäß I=I(Pₛₒₗₗ + Δ P) bestromt, um es zu schließen. Der Verlauf von Pᵢₛₜ ohne diese Stromerhöhung, der sich aufgrund von Leckagen einstellen würde, ist mit 80 bezeichnet.

### III.) Eintritt in den Druckabbau:

Möglichkeit A): Sprung auf die Ventilkennlinie
Vorteil: Schnelle Reaktion
Möglichkeit B): Sprung in die Nähe I=I(Pₛₒₗₗ + Δ P) der Ventilkennlinie. Anschließend erfolgt ein sanfter, angepasster Übergang mittels Rampe 2 in bzw. auf die Ventilkennlinie; d.h. I=I(Pₛₒₗₗ)
Vorteil: Kennlinienfehler werden nicht mehr spürbar.

Beenden der Verstärkung, der Druck der Betätigungseinheit 1 ist wieder der Raddruck
Stromrampe nach I=0 (Rampe 3).

Rampen: Diese bieten den Vorteil, dass sich Fehler in den Kennlinien nicht als Schlag am Pedal spürbar machen, sondern durch langsame unspürbare Übergangsvorgänge abgebaut werden. Weiter wird die Geräuschentwicklung stark reduziert.

## Patentansprüche

1. Verfahren zum Einregeln eines vorgegebenen veränderlichen Bremsdruckes in den Radbremsen einer Bremsanlage, bei dem den Bremsdruck in den einzelnen Radbremsen bestimmende Eingangsgrößen ausgewertet und elektrische Ventilströme als Stellgröße von Hydraulikventilen festgelegt werden, wobei die Betätigungseinheit (1) durch ein Trennventil (6) von den Radbremsen (10,11) abgetrennt wird und anschließend ein Druckaufbau mit einer elektrisch ansteuerbaren Pumpe (16) erfolgt, wobei in einem Regelungs- oder Datenverarbeitungssystem (28) eine Ventilkennlinie hinterlegt ist, die den Ventilstrom des Trennventils (6) mit einer Druckdifferenz des Trennventils (6) korreliert, und wobei das Trennventil (6) analog gesteuert wird, wobei der Ventilstrom des Trennventils (6) nach Maßgabe der Kennlinie bestimmt und so eingestellt wird, dass mindestens zwei Strategien zum Einstellen des Bremsdrucks vorgesehen sind, wobei nach der ersten Strategie der Ventilstrom dem Verlauf der Kennlinie folgt und die zweite Strategie Sprungfunktionen zu dem maximalen Ventilstrom bzw. zu dem durch die Kennlinie repräsentierten Ventilstrom vorsieht.

2. Verfahren nach Anspruch 1, **dadurch gekennzeichnet, dass** der Ventilstrom aus der Druckdifferenz zwischen dem Solldruck für die Radbremsen (10,11) und dem Druck der Betätigungseinheit (1) bestimmt wird.

3. Verfahren nach Anspruch 1 oder 2, **dadurch gekennzeichnet, dass** der maximale Ventilstrom des Trennventils (6) nach der Funktion Iₘₐₓ=f(Pₘₐₓ, P_{THZ}, P_{DBV})=min(Pₘₐₓ-P_{THZ}, P_{DBV}) begrenzt wird, wobei Iₘₐₓ den maximalen Ventilstrom, Pₘₐₓ den maximalen Druck in den Radbremsen, P_{THZ} den Druck der Betätigungseinheit und P_{DBV} den Druckbegrenzungs-Ventildruck bezeichnet.

4. Verfahren nach Anspruch 3, **dadurch gekennzeichnet, dass** das Trennventil (6) geöffnet wird, wenn ein aus dem Druck vor und hinter dem Trennventil (6) gebildeter Differenzdruck einen vorgegebenen Wert (P_{DBV}) übersteigt.

5. Einrichtung zur Durchführung des Verfahrens nach einem der Ansprüche 1 bis 4, **dadurch gekennzeichnet, dass** der durch Ansteuerung einer Pumpe erzeugte veränderliche Bremsdruck so gesteuert wird, dass eine gewünschte hydraulische Verstärkung in jedem Bremskreis erfolgt.

## Claims

1. Method for regulating a predetermined modifiable brake pressure in the wheel brakes of a brake system in which input variables which determine the brake pressure in the individual wheel brakes are evaluated, and electrical valve currents are defined as a manipulated variable of hydraulic valves, wherein the activation unit (1) is disconnected from the wheel brakes (10, 11) by an isolating valve (6), and a pressure build up is subsequently carried out with a pump (16) which can be actuated electrically, wherein a valve characteristic curve, which correlates the valve current of the isolating valve (6) with a pressure difference of the isolating valve (6), is stored in a regulating or data-processing system (28), and wherein the isolating valve (6) is controlled analogously, wherein the valve current of the isolating valve (6) is determined in accordance with the characteristic curve and is set in such way that at least two strategies for setting the brake pressure are provided, wherein according to the first strategy the valve current follows the profile of the characteristic curve, and the second strategy provides jump functions with respect to the maximum valve current or with respect to the valve current represented by the characteristic curve.

2. Method according to Claim 1, **characterized in that** the valve current is determined from the pressure difference between the setpoint pressure for the wheel brakes (10, 11) and the pressure of the activation unit (1).

3. Method according to Claim 1 or 2, **characterized in that** the maximum valve current of the isolating valve (6) is limited according to the function Iₘₐₓ=f (Pₘₐₓ, P_{THZ}, P_{DBV})=min (Pₘₐₓ-P_{THZ}, P_{DBV}) wherein Iₘₐₓ denotes the maximum valve current, Pₘₐₓ denotes the maximum pressure in the wheel brakes, P_{THZ} denotes the pressure of the activation unit and P_{DBV} denotes the pressure-limiting valve pressure.

4. Method according to Claim 3, **characterized in that** the isolating valve (6) is opened if a difference pressure formed from the pressure upstream and downstream of the isolating valve (6) exceeds a predefined value (P_{DHV}).

5. Device for carrying out the method according to one of Claims 1 to 4, **characterized in that** modifiable brake pressure which can be generated by actuating a pump is controlled in such a way that desired hydraulic boosting takes place in every brake circuit.

## Revendications

1. Procédé pour régler une pression de freinage variable prédéfinie dans les freins de roue d'une installation de freinage, dans lequel la pression de freinage est analysée sous la forme de grandeurs d'entrée définissant les freins de roue individuels et les courants électriques de soupape étant stipulés comme grandeur de réglage de soupapes hydrauliques, l'unité d'actionnement (1) étant séparée des freins de roue (10, 11) par une soupape de sectionnement (6) puis une mise sous pression se produisant à l'aide d'une pompe (16) à commande électrique, une courbe caractéristique de soupape étant mémorisée dans un système de régulation ou de traitement de données (28), ladite courbe permettant de mettre en corrélation le courant de soupape de la soupape de sectionnement (6) avec une différence de pression de la soupape de sectionnement (6) et la soupape de sectionnement (6) étant commandée de façon analogique, le courant de soupape de la soupape de sectionnement (6) étant déterminé conformément à la courbe caractéristique de la soupape et réglé de façon à prévoir au moins deux stratégies de réglage de la pression de freinage, le courant de soupape suivant le tracé de la courbe caractéristique selon la première stratégie et la deuxième stratégie prévoyant des fonctions de saut par rapport au courant de soupape maximal et/ou au courant de soupape représenté par la courbe caractéristique.

2. Procédé selon la revendication 1, **caractérisé en ce que** le courant de soupape est déterminé à partir de la différence de pression régnant entre la pression théorique des freins de roue (10, 11) et la pression de l'unité d'actionnement (1).

3. Procédé selon la revendication 1 ou 2, **caractérisé en ce que** le courant de soupape maximal de la soupape de sectionnement (6) est limité par la fonction Iₘₐₓ=f(Pₘₐₓ, P_{THZ}, P_{DBV}) =min(Pₘₐₓ-P_{THZ}, P_{DBV}) Iₘₐₓ étant le courant de soupape maximal, Pₘₐₓ étant la pression maximale régnant dans les freins de roue, P_{THZ} désignant la pression de l'unité d'actionnement et P_{DHV} la limitation de la pression de soupape de pression.

4. Procédé selon la revendication 3, **caractérisé en ce que** la soupape de sectionnement (6) est ouverte lorsqu'une pression différentielle formée à partir de la pression devant et derrière la soupape de sectionnement (6) dépasse une valeur (P_{DBV}) prédéfinie.

5. Dispositif de mise en oeuvre du procédé selon l'une quelconque des revendications 1 à 4, **caractérisé en ce que** la pression de freinage variable produite par excitation d'une pompe est commandée de telle sorte qu'un renfort hydraulique souhaité se produit dans chaque circuit de freinage.
